(19) Europäisches Patentamt
European Patent Office
Office européen des brevets

(11) EP 3 575 115 A1

(12) EUROPEAN PATENT APPLICATION
published in accordance with Art. 153(4) EPC

(43) Date of publication:
04.12.2019 Bulletin 2019/49

(51) Int Cl.:
B60K 6/36 (2007.10)          B60K 6/387 (2007.10)
B60K 6/40 (2007.10)          B60K 6/48 (2007.10)
B60K 6/547 (2007.10)        B60K 17/04 (2006.01)
B60K 17/08 (2006.01)        B60L 11/14 (2006.01)
B60W 10/10 (2012.01)        B60W 20/30 (2016.01)
F16H 3/089 (2006.01)

(21) Application number: 18763700.4

(22) Date of filing: 01.03.2018

(86) International application number:
PCT/JP2018/007708

(87) International publication number:
WO 2018/163949 (13.09.2018 Gazette 2018/37)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.03.2017 JP 2017046342

(71) Applicant: Exedy Corporation
Neyagawa-shi, Osaka 572-8570 (JP)

(72) Inventor: MURATA, Kousuke
Neyagawa-shi
Osaka 572-8570 (JP)

(74) Representative: KASTEL Patentanwälte PartG
mbB
St.-Cajetan-Straße 41
81669 München (DE)

(54) **HYBRID VEHICLE TRANSMISSION**

(57)     A hybrid vehicle transmission (100) includes a first input shaft (1), a second input shaft (2), an output shaft (3), a plurality of input gears (41 to 45), a plurality of output gears (51 to 55) and a first synchromesh mechanism (61). The plurality of input gears (41 to 45) are provided in correspondence to a plurality of gear stages, and are each supported by the first input shaft (1) or the second input shaft (2). The plurality of output gears (51 to 55) are provided in correspondence to the plurality of gear stages, and are supported by the output shaft (3). The first synchromesh mechanism (61) is configured to couple the first input shaft (1) and the second input shaft (2) while being capable of decoupling the first input shaft (1) and the second input shaft (2).

FIG. 1

## Description

TECHNICAL FIELD

The present invention relates to a hybrid vehicle transmission.

BACKGROUND ART

PTL 1 discloses a transmission used for a hybrid vehicle in which an engine and an electric motor are used as drive sources. The transmission described in PTL 1 transmits rotation of the engine to a drive wheel after the rotation is changed in speed therethrough. Additionally, rotation of the electric motor is transmitted at a predetermined speed to the drive wheel without through the transmission.

CITATION LIST

PATENT LITERATURE

PTL 1: Japan Laid-open Patent Application Publication No. 2005-153691

SUMMARY OF THE INVENTION

Technical Problems

In the transmission described above, the rotation transmitted thereto from the engine is changed in speed by a plurality of pairs of gears, whereas the rotation of the electric motor is not changed in speed because the electric motor is connected to a final gear. Therefore, the transmission has a drawback that the range of use of the electric motor is inevitably limited.

It is an object of the present invention to provide a hybrid vehicle transmission capable of widening the range of use of an electric motor by changing not only the rotational speed of an engine but also that of an electric motor.

Solution to Problems

A hybrid vehicle transmission according to an aspect of the present invention has a plurality of gear stages, and is configured to output rotation of each of an engine and an electric motor after the rotation is changed in speed therethrough. The hybrid vehicle transmission includes a first input shaft, a second input shaft, an output shaft, a plurality of input gears, a plurality of output gears and input shaft coupling means. The first input shaft is a component to which a torque is inputted from the engine. The second input shaft is a component to which a torque is inputted from the electric motor, and is disposed coaxially to the first input shaft. The output shaft is disposed in parallel to the first and second input shafts. The plurality of input gears are provided in correspondence to the plurality of gear stages, and are each supported by either the first input shaft or the second input shaft. The plurality of output gears are provided in correspondence to the plurality of gear stages, and are supported by the output shaft. The input shaft coupling means is configured to couple the first input shaft and the second input shaft while being capable of decoupling the first input shaft and the second input shaft.

The hybrid vehicle transmission configured as described above can widen the range of use of the electric motor by changing not only the rotational speed of the engine but also that of the electric motor.

Preferably, the hybrid vehicle transmission further includes input gear coupling means. The plurality of input gears include a stationary input gear and a movable input gear. The stationary input gear is attached to either the first input shaft or the second input shaft so as to be rotated unitarily therewith. The movable input gear is attached to either the first input shaft or the second input shaft so as to be rotated relatively thereto. The input gear coupling means is configured to couple the movable input gear to either the first input shaft or the second input shaft and decouple the movable input gear therefrom.

Preferably, the hybrid vehicle transmission further includes output gear coupling means. The plurality of output gears include a stationary output gear and a movable output gear. The stationary output gear is attached to the output shaft so as to be rotated unitarily therewith. The movable output gear is attached to the output shaft so as to be rotated relatively thereto. The output gear coupling means is configured to couple the movable output gear to the output shaft and decouple the movable output gear therefrom.

Preferably, one input gear of the plurality of input gears corresponds to odd-numbered one of the plurality of gear stages, and is supported by one of the first input shaft and the second input shaft. Additionally, another input gear of the plurality of input gears corresponds to even-numbered one of the plurality of gear stages, and is supported by the other of the first input shaft and the second input shaft.

Preferably, one input gear of the plurality of input gears corresponds to odd-numbered one of the plurality of gear stages, and is supported by the second input shaft. Additionally, another input gear of the plurality of input gears corresponds to even-numbered one of the plurality of gear stages, and is supported by the first input shaft.

Preferably, the plurality of gear stages are four gear stages.

Preferably, the hybrid vehicle transmission further includes a reverse gear stage for backward movement provided separately from the plurality of gear stages.

Preferably, the input shaft coupling means is a synchromesh mechanism.

Preferably, the input gear coupling means is a synchromesh mechanism.

Preferably, the output gear coupling means is a synchromesh mechanism.

Preferably, the hybrid vehicle transmission further includes a clutch configured to allow and block transmission of the torque from the engine to the first input shaft therethrough.

Preferably, the clutch is a dry friction clutch.

Preferably, the hybrid vehicle transmission further includes a third input shaft, a drive gear and a driven gear. The third input shaft is a component to which the electric motor is connected, and is disposed in parallel to the second input shaft. The drive gear is rotated unitarily with the third input shaft. The driven gear is rotated unitarily with the second input shaft, and is meshed with the drive gear.

Advantageous Effects of Invention

The hybrid vehicle transmission according to the present invention can change not only the rotational speed of an engine but also that of an electric motor.

BRIEF DESCRIPTION OF THE DRAWINGS

FIG. 1 is a schematic diagram showing a configuration of a hybrid vehicle transmission according to the present exemplary embodiment.
FIG. 2 is a table showing exemplary gear shift patterns.
FIG. 3 is a diagram showing a torque flow in gear shift pattern No. 1.
FIG. 4 is a diagram showing a torque flow in gear shift pattern No. 2.
FIG. 5 is a diagram showing a torque flow in gear shift pattern No. 3.
FIG. 6 is a diagram showing a torque flow in gear shift pattern No. 4.
FIG. 7 is a diagram showing a torque flow in gear shift pattern No. 5.
FIG. 8 is a diagram showing a torque flow in gear shift pattern No. 6.
FIG. 9 is a diagram showing a torque flow in gear shift pattern No. 7.
FIG. 10 is a diagram showing a torque flow in gear shift pattern No. 8.
FIG. 11 is a diagram showing torque flows in gear shift pattern No. 9.
FIG. 12 is a diagram showing torque flows in gear shift pattern No. 10.
FIG. 13 is a diagram showing torque flows in gear shift pattern No. 11.
FIG. 14 is a diagram showing torque flows in gear shift pattern No. 12.
FIG. 15 is a diagram showing torque flows in gear shift pattern No. 13.
FIG. 16 is a diagram showing torque flows in gear shift pattern No. 14.
FIG. 17 is a diagram showing torque flows in gear shift pattern No. 15.
FIG. 18 is a diagram showing torque flows in gear shift pattern No. 16.
FIG. 19 is a diagram showing a torque flow in gear shift pattern No. 17.
FIG. 20 is a diagram showing torque flows in gear shift pattern No. 18.
FIG. 21 is a schematic diagram showing a configuration of a hybrid vehicle transmission according to a modification.

DESCRIPTION OF EMBODIMENTS

An exemplary embodiment of a hybrid vehicle transmission according to the present invention will be hereinafter explained with reference to drawings.

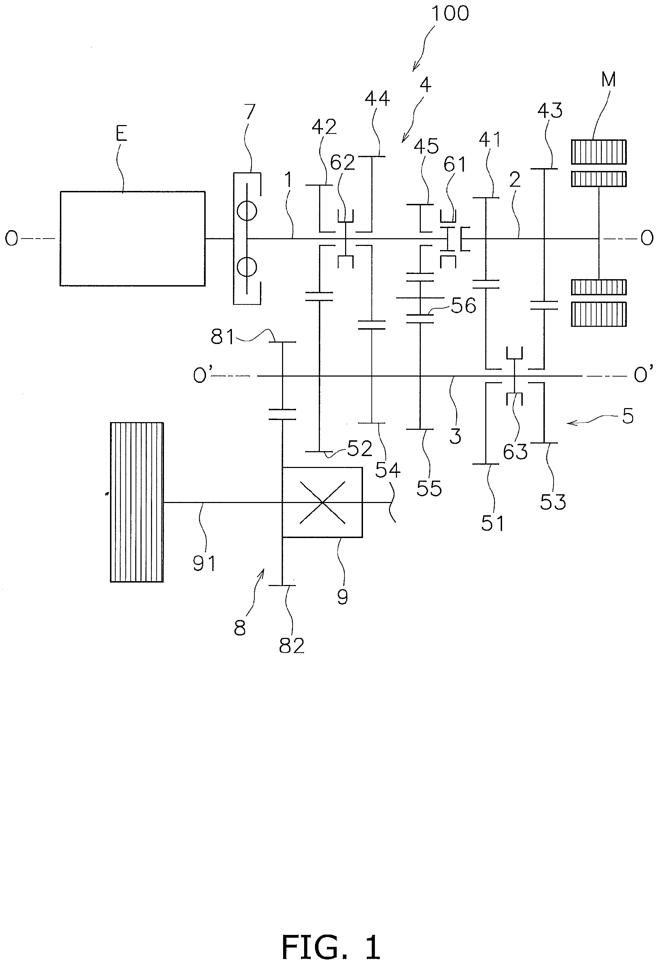

As shown in FIG. 1, a hybrid vehicle transmission 100 has a plurality of gear stages. In the present exemplary embodiment, the hybrid vehicle transmission 100 has four gear stages. Additionally, the hybrid vehicle transmission 100 further has a reverse gear stage for backward movement provided separately from the four stage gears.

The hybrid vehicle transmission 100 is configured to output rotation of each of an engine E and an electric motor M after the rotation is changed in speed therethrough. The hybrid vehicle transmission 100 includes a first input shaft 1, a second input shaft 2, an output shaft 3, an input gear train 4, an output gear train 5, a first synchromesh mechanism 61 (exemplary input shaft coupling means), a second synchromesh mechanism 62 (exemplary input gear coupling means), a third synchromesh mechanism 63 (exemplary output gear coupling means) and a clutch 7.

[First Input Shaft]

The first input shaft 1 is a component to which a torque transmitted from the engine E is inputted. Detailedly, the first input shaft 1 is connected to the engine E through the clutch 7. Transmission of the torque from the engine E to the first input shaft 1 can be allowed or blocked by operating the clutch 7. The first input shaft 1 is disposed to be rotated about a rotational axis O. The clutch 7 is, for instance, a dry friction clutch.

[Second Input Shaft]

The second input shaft 2 is a component to which a torque transmitted from the electric motor M is inputted. The second input shaft 2 is disposed coaxially to the first input shaft 1. The second input shaft 2 is disposed to be rotated about the rotational axis O.

[Output Shaft]

The output shaft 3 is disposed in parallel to the first input shaft 1 and the second input shaft 2. The output shaft 3 is disposed to be rotated about a rotational axis O'.

[Input Gear Train]

The input gear train 4 includes a plurality of input gears provided in correspondence to the respective gear stages. Specifically, the input gear train 4 includes a first stage input gear 41, a second stage input gear 42, a third stage input gear 43 and a fourth stage input gear 44. In the input gears, those corresponding to odd-numbered stages are supported by the second input shaft 2. In other words, the first stage input gear 41 and the third stage input gear 43 are supported by the second input shaft 2. On the other hand, in the input gears , those corresponding to even-numbered stages are supported by the first input shaft 1. In other words, the second stage input gear 42 and the fourth stage input gear 44 are supported by the first input shaft 1.

Additionally, the input gear train 4 includes stationary input gears and movable input gears. In the input gears, the stationary input gears are those attached to be rotated unitarily with either the first input shaft 1 or the second input shaft 2. Specifically, the first stage input gear 41 and the third stage input gear 43 are the stationary input gears. The first stage input gear 41 and the third stage input gear 43 are attached to be rotated unitarily with the second input shaft 2.

In the input gears, the movable input gears are those attached to be rotated relatively to either the first input shaft 1 or the second input shaft 2. Specifically, the second stage input gear 42 and the fourth stage input gear 44 are the movable input gears. The second stage input gear 42 and the fourth stage input gear 44 are attached to be rotated relatively to the first input shaft 1.

Additionally, the input gear train 4 further includes a reverse input gear 45. The reverse input gear 45 is attached as a movable input gear to be rotated relatively to the first input shaft 1.

[Output Gear Train]

The output gear train 5 includes a plurality of output gears provided in correspondence to the respective gear stages. Specifically, the output gear train 5 includes a first stage output gear 51, a second stage output gear 52, a third stage output gear 53 and a fourth stage output gear 54. The respective output gears 51 to 54 are supported by the output shaft 3. It should be noted that the first stage output gear 51 is meshed with the first stage input gear 41; the second stage output gear 52 is meshed with the second stage input gear 42; the third stage output gear 53 is meshed with the third stage input gear 43; and the fourth stage output gear 54 is meshed with the fourth stage input gear 44.

Additionally, the output gear train 5 includes stationary output gears and movable output gears. In the output gears, the stationary output gears are those attached to be rotated unitarily with the output shaft 3. Specifically, the second stage output gear 52 and the fourth stage output gear 54 are the stationary output gears. The second stage output gear 52 and the fourth stage output gear 54 are attached to be rotated unitarily with the output shaft 3.

In the output gears, the movable output gears are those attached to be rotated relatively to the output shaft 3. Specifically, the first stage output gear 51 and the third stage output gear 53 are the movable output gears. The first stage output gear 51 and the third stage output gear 53 are attached to be rotated relatively to the output shaft 3.

Additionally, the output gear train 5 further includes a reverse output gear 55. The reverse output gear 55 is attached as a stationary output gear to be rotated unitarily with the output shaft 3. The reverse output gear 55 is meshed with the reverse input gear 45 through an idler gear 56.

[First Synchromesh Mechanism]

The first synchromesh mechanism 61 is configured to couple the first input shaft 1 and the second input shaft 2 while being capable of decoupling the both. Specifically, the first synchromesh mechanism 61 selectively couples either the second input shaft 2 or the reverse input gear 45 to the first input shaft 1, and also, decouples the both from each other.

[Second Synchromesh Mechanism]

The second synchromesh mechanism 62 is configured to couple predetermined one of the movable input gears to and the first input shaft 1 and decouple the both from each other. Specifically, the second synchromesh mechanism 62 is attached to the first input shaft 1. The second synchromesh mechanism 62 selectively couples either the second stage input gear 42 or the fourth stage input gear 44 to the first input shaft 1, and decouples the both from each other.

[Third Synchromesh Mechanism]

The third synchromesh mechanism 63 is configured to couple predetermined one of the movable output gears to the output shaft 3 and decouple the both from each other. Specifically, the third synchromesh mechanism 63 is attached to the output shaft 3. The third synchromesh mechanism 63 selectively couples either the first stage output gear 51 or the third stage output gear 53 to the output shaft 3, and decouples the both from each other.

[Final Gear Train 8]

Additionally, the hybrid vehicle transmission 100 further includes a final gear train 8. The final gear train 8 includes a final drive gear 81 and a final driven gear 82. The final drive gear 81 is attached to the output shaft 3 so as to be rotated unitarily therewith. The final driven gear 82 is fixed to an input shaft (axle) 91 of a differential gear 9, and is meshed with the final drive gear 81.

[Action of Hybrid Vehicle Transmission]

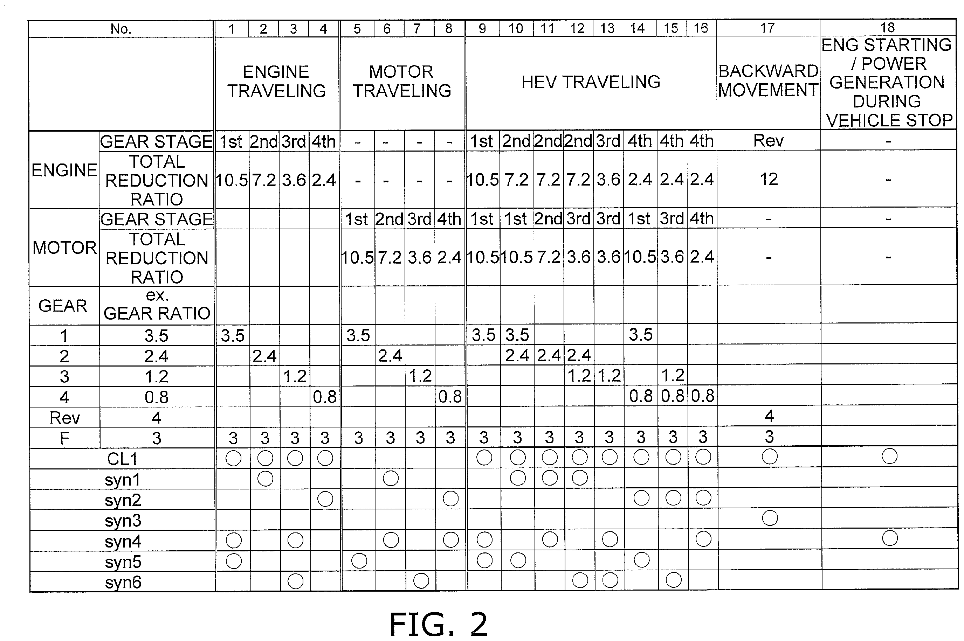

An action of the hybrid vehicle transmission 100 configured as described above will be explained. FIG. 2 shows actions of the clutch 7 and the first to third synchromesh mechanisms 61 to 63 and gear ratios in the respective gear shift patterns.

It should be noted that in FIG. 2, "syn1··o" indicates that the second synchromesh mechanism 62 is actuated to couple the second stage input gear 42 and the first input shaft 1. Likewise, "syn2··o" indicates that the second synchromesh mechanism 62 is actuated to couple the fourth stage input gear 44 and the first input shaft 1; "syn3··o" indicates that the first synchromesh mechanism 61 is actuated to couple the reverse input gear 45 and the first input shaft 1; "syn4··o" indicates that the first synchromesh mechanism 61 is actuated to couple the first input shaft 1 and the second input shaft 2; "syn5··o" indicates that the third synchromesh mechanism 63 is actuated to couple the first stage output gear 51 and the output shaft 3; and "syn6··o" indicates that the third synchromesh mechanism 63 is actuated to couple the third stage output gear 53 and the output shaft 3. On the other hand, "CL1··o" indicates that the clutch 7 is engaged such that the torque from the engine E is transmitted to the first input shaft 1.

In fields of gear ratios ("GEAR" and "ex. GEAR RATIO"), a row "1··3.5" indicates that a first stage gear ratio (the number of teeth of the first stage output gear 51/the number of teeth of the first stage input gear 41) is "3.5", and likewise, subsequent rows indicate that second to fourth stage gear ratios are "2.4", "1.2" and "0.8", respectively. A row "F··3" indicates that the gear ratio of the final gear train 8 is "3". On the other hand, a row "Rev··4" indicates that the gear ratio in backward movement (the number of teeth of the reverse output gear 55/the number of teeth of the reverse input gear 45) is "4". It should be noted that values of the respective gear ratios are exemplary only, and are not limited to the above.

Gear shift patters Nos. 1 to 4 are used in traveling by the engine E; gear shift patterns Nos. 5 to 8 are used in traveling by the electric motor M; gear shift patterns Nos. 9 to 16 are used in traveling by the engine E and the electric motor M; gear shift pattern No. 17 is used in backward movement by the engine E; and gear shift pattern No. 18 is used in starting of the engine E and power generation by the electric motor M.

[Gear Shift Pattern No. 1]

As shown in FIG. 2, in the gear shift pattern No. 1, the torque from the engine E is transmitted to the first input shaft 1 in the clutch 7. Additionally, the first input shaft 1 and the second input shaft 2 are coupled by the first synchromesh mechanism 61. Moreover, the first stage output gear 51 is coupled to the output shaft 3 by the third synchromesh mechanism 63.

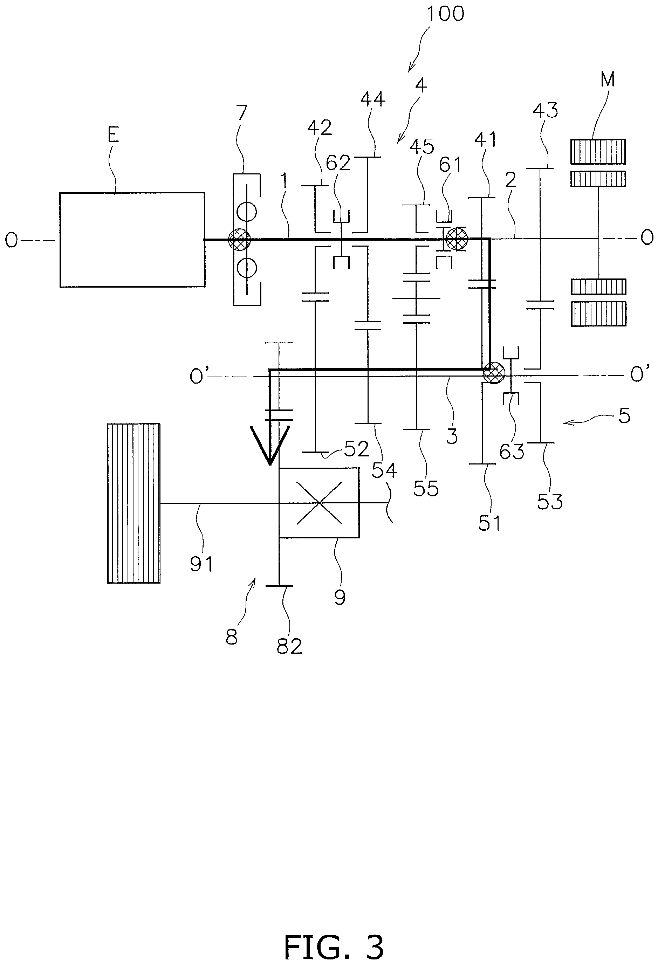

In this case, as indicated with a bold line in FIG. 3, the torque from the engine E is transmitted through a path of "the engine E → the first input shaft 1 → the second input shaft 2 → the first stage input gear 41 → the first stage output gear 51 → the output shaft 3 → the final gear train 8". The gear ratio in this path is as follows.

$$(Gear\ 1:\ 3.5) \times (Gear\ F:\ 3) = 10.5$$

[Gear Shift Pattern No. 2]

As shown in FIG. 2, in the gear shift pattern No. 2, the torque from the engine E is transmitted to the first input shaft 1 in the clutch 7. Additionally, the second stage input gear 42 is coupled to the first input shaft 1 by the second synchromesh mechanism 62.

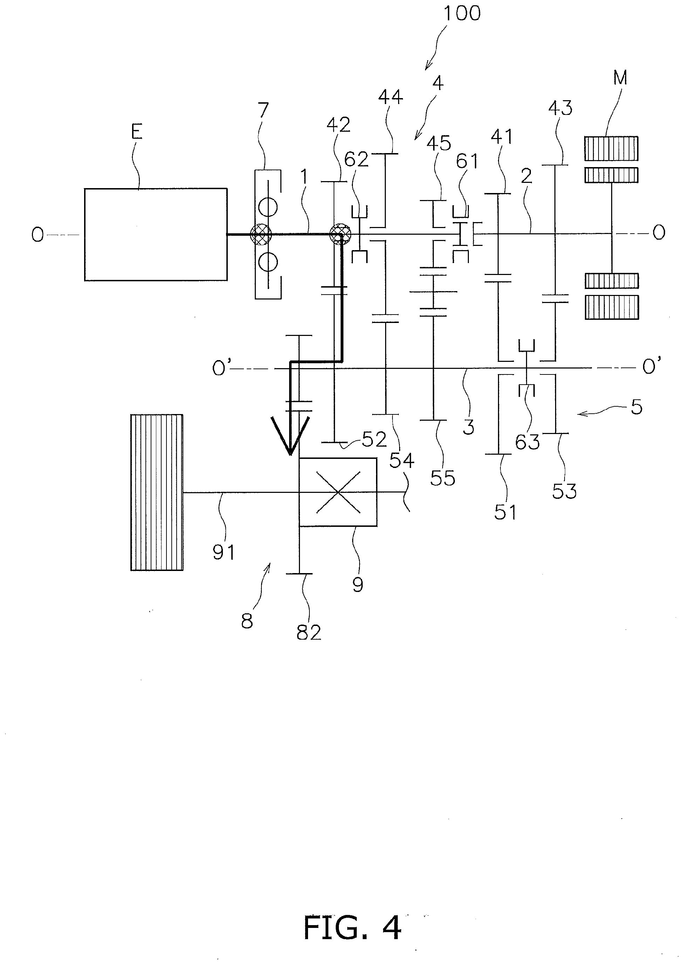

In this case, as indicated with a bold line in FIG. 4, the torque from the engine E is transmitted through a path of "the engine E → the first input shaft 1 → the second stage input gear 42 → the second stage output gear 52 → the output shaft 3 → the final gear train 8". The gear ratio in this path is as follows.

$$(Gear\ 2:\ 2.4) \times (Gear\ F:\ 3) = 7.2$$

[Gear Shift Pattern No. 3]

As shown in FIG. 2, in the gear shift pattern No. 3, the torque from the engine E is transmitted to the first input shaft 1 in the clutch 7. Additionally, the first input shaft 1 and the second input shaft 2 are coupled by the first synchromesh mechanism 61. Moreover, the third stage output gear 53 is coupled to the output shaft 3 by the third synchromesh mechanism 63.

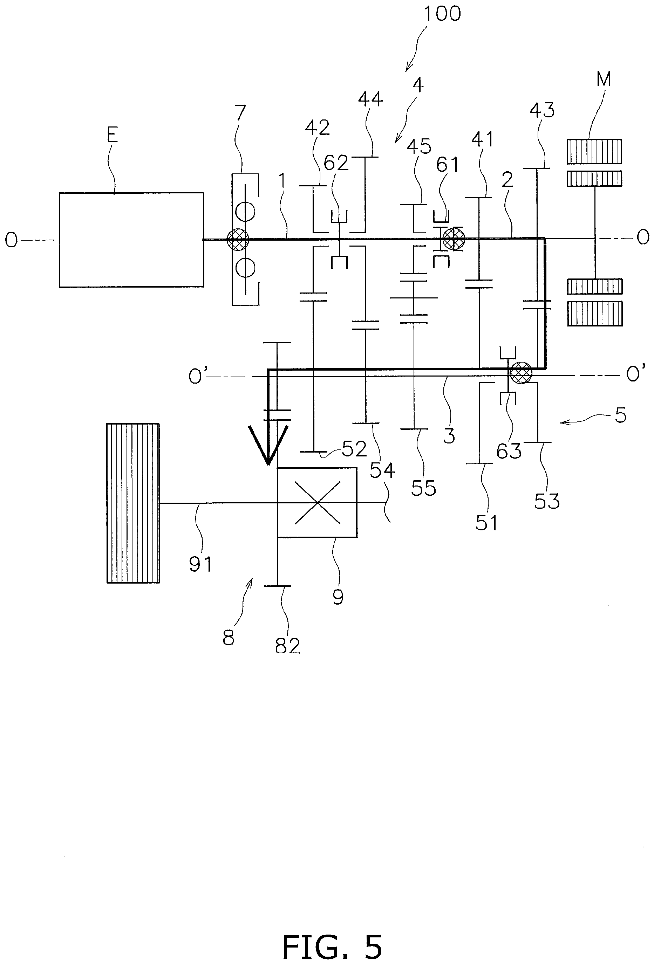

In this case, as indicated with a bold line in FIG. 5, the torque from the engine E is transmitted through a path of "the engine E → the first input shaft 1 → the second input shaft 2 → the third stage input gear 43 → the third stage output gear 53 → the output shaft 3 → the final gear train 8". The gear ratio in this path is as follows. (Gear 3: 1.2)×(Gear F: 3)=3.6

[Gear Shift Pattern No. 4]

As shown in FIG. 2, in the gear shift pattern No.

4, the torque from the engine E is transmitted to the first input shaft 1 in the clutch 7. Additionally, the fourth stage input gear 44 is coupled to the first input shaft 1 by the second synchromesh mechanism 62.

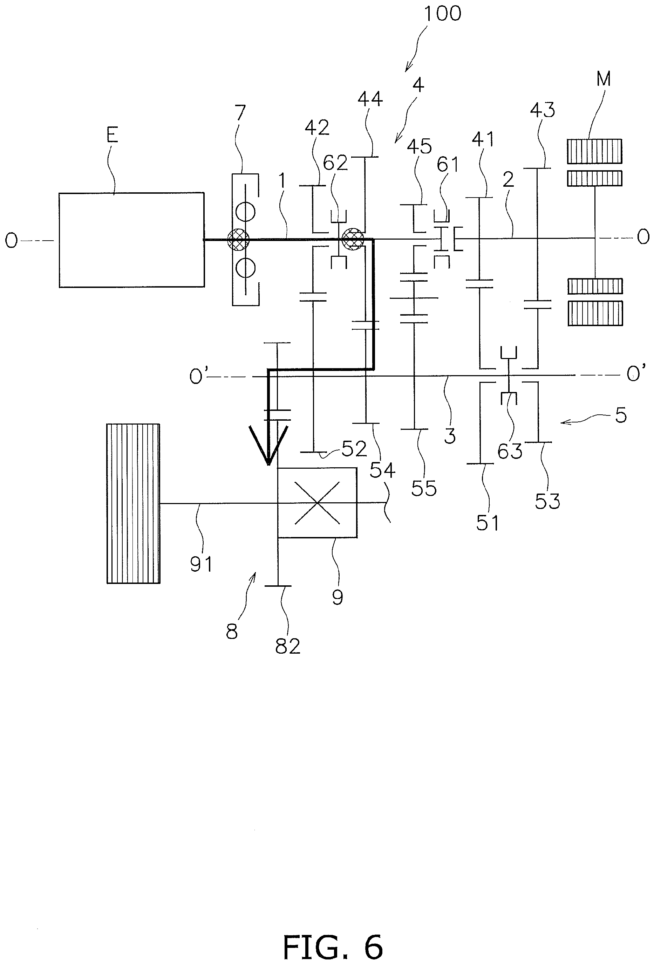

In this case, as indicated with a bold line in FIG. 6, the torque from the engine E is transmitted through a path of "the engine E → the first input shaft 1 → the fourth stage input gear 44 → the fourth stage output gear 54 → the output shaft 3 → the final gear train 8". The gear ratio in this path is as follows.

$$(\text{Gear } 4: \ 0.8) \times (\text{Gear } F: \ 3) = 2.4$$

[Gear Shift Pattern No. 5]

As shown in FIG. 2, in the gear shift pattern No. 5, the torque from the engine E is blocked from being transmitted to the first input shaft 1 in the clutch 7. Additionally, the first stage output gear 51 is coupled to the output shaft 3 by the third synchromesh mechanism 63.

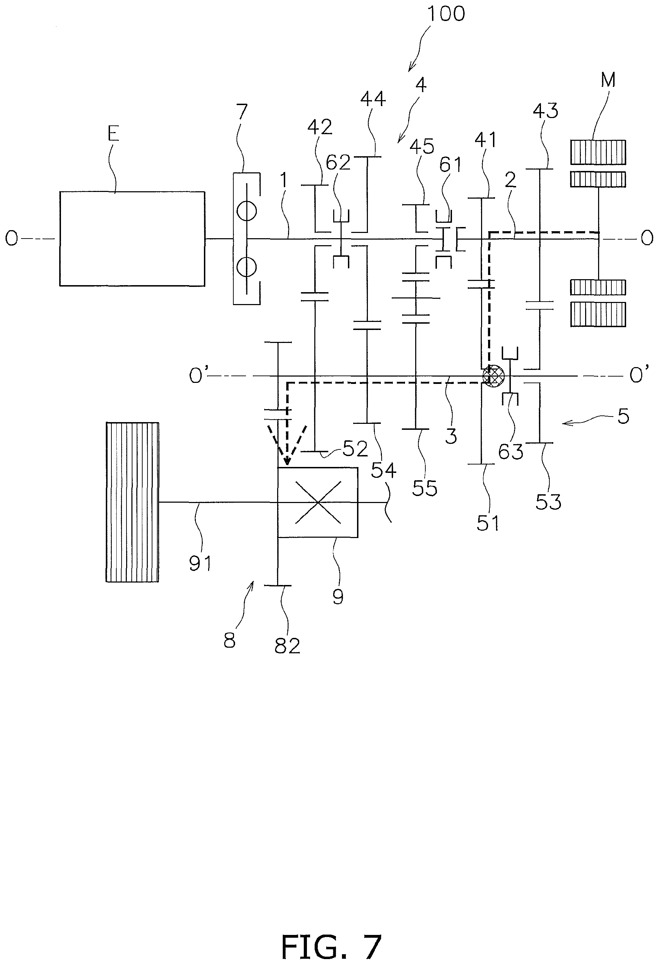

In this case, as indicated with a dotted line in FIG. 7, the torque from the electric motor M is transmitted through a path of "the electric motor M → the second input shaft 2 → the first stage input gear 41 → the first stage output gear 51 → the output shaft 3 → the final gear train 8". The gear ratio in this path is as follows.

$$(\text{Gear } 1: \ 3.5) \times (\text{Gear } F: \ 3) = 10.5$$

[Gear Shift Pattern No. 6]

As shown in FIG. 2, in the gear shift pattern No. 6, the torque from the engine E is blocked from being transmitted to the first input shaft 1 in the clutch 7. Additionally, the first input shaft 1 and the second input shaft 2 are coupled by the first synchromesh mechanism 61. Moreover, the second stage input gear 42 is coupled to the first input shaft 1 by the second synchromesh mechanism 62.

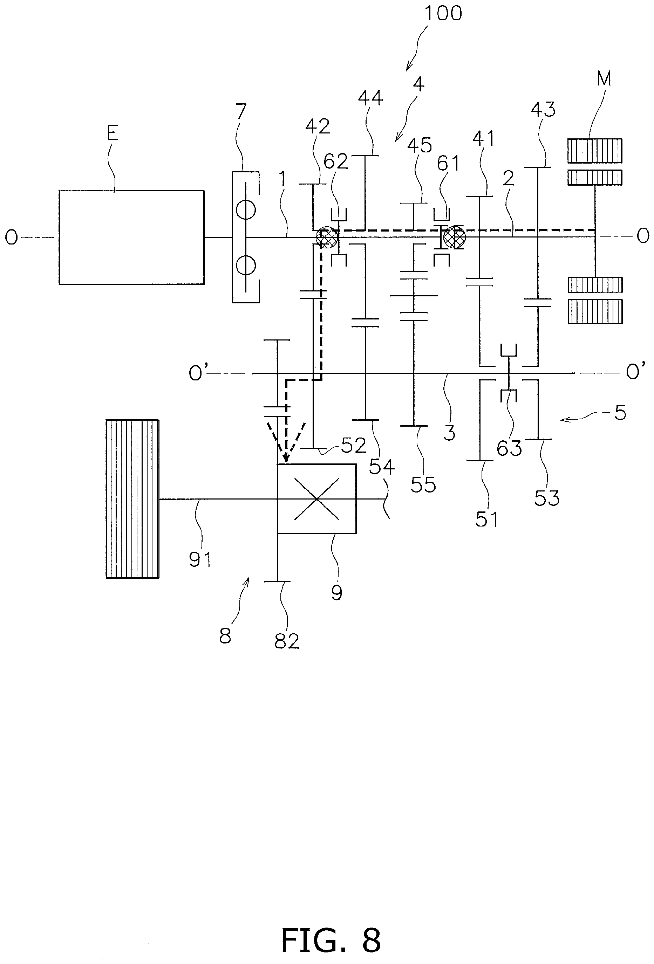

In this case, as indicated with a dotted line in FIG. 8, the torque from the electric motor M is transmitted through a path of "the electric motor M → the second input shaft 2 → the first input shaft 1 → the second stage input gear 42 → the second stage output gear 52 → the output shaft 3 → the final gear train 8". The gear ratio in this path is as follows.

$$(\text{Gear } 2: \ 2.4) \times (\text{Gear } F: \ 3) = 7.2$$

[Gear Shift Pattern No. 7]

As shown in FIG. 2, in the gear shift pattern No. 7, the torque from the engine E is blocked from being transmitted to the first input shaft 1 in the clutch 7. Additionally, the third stage output gear 53 is coupled to the output shaft 3 by third synchromesh mechanism 63.

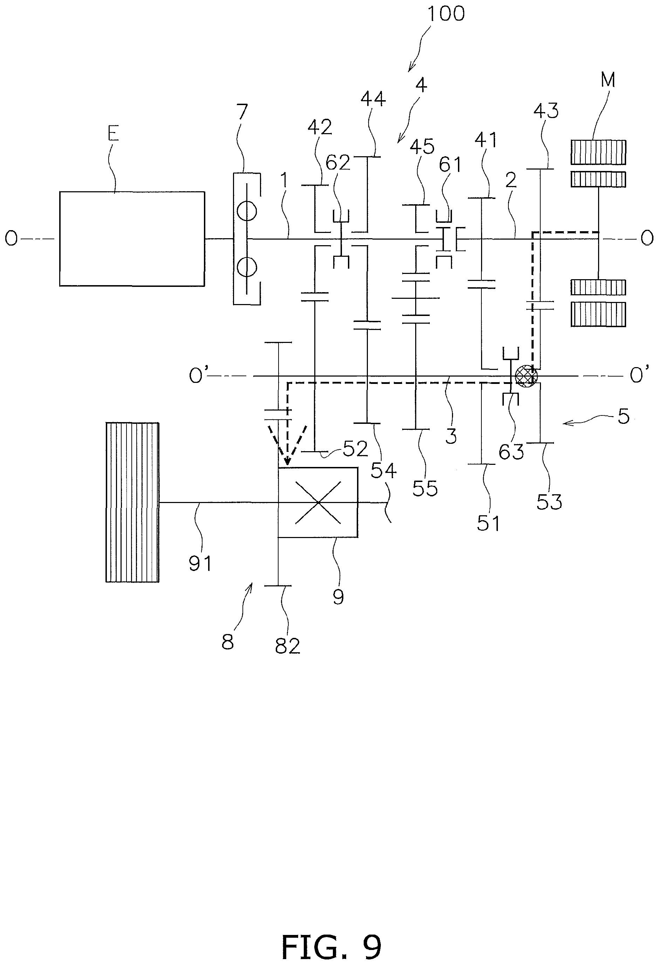

In this case, as indicated with a dotted line in FIG. 9, the torque from the electric motor M is transmitted through a path of "the electric motor M → the second input shaft 2 → the third stage input gear 43 → the third stage output gear 53 → the output shaft 3 → the final gear train 8". The gear ratio in this path is as follows.

$$(\text{Gear } 3: \ 1.2) \times (\text{Gear } F: \ 3) = 3.6$$

[Gear Shift Pattern No. 8]

As shown in FIG. 2, in the gear shift pattern No. 8, the torque from the engine E is blocked from being transmitted to the first input shaft 1 in the clutch 7. Additionally, the first input shaft 1 and the second input shaft 2 are coupled by the first synchromesh mechanism 61. Moreover, the fourth stage input gear 44 is coupled to the first input shaft 1 by the second synchromesh mechanism 62.

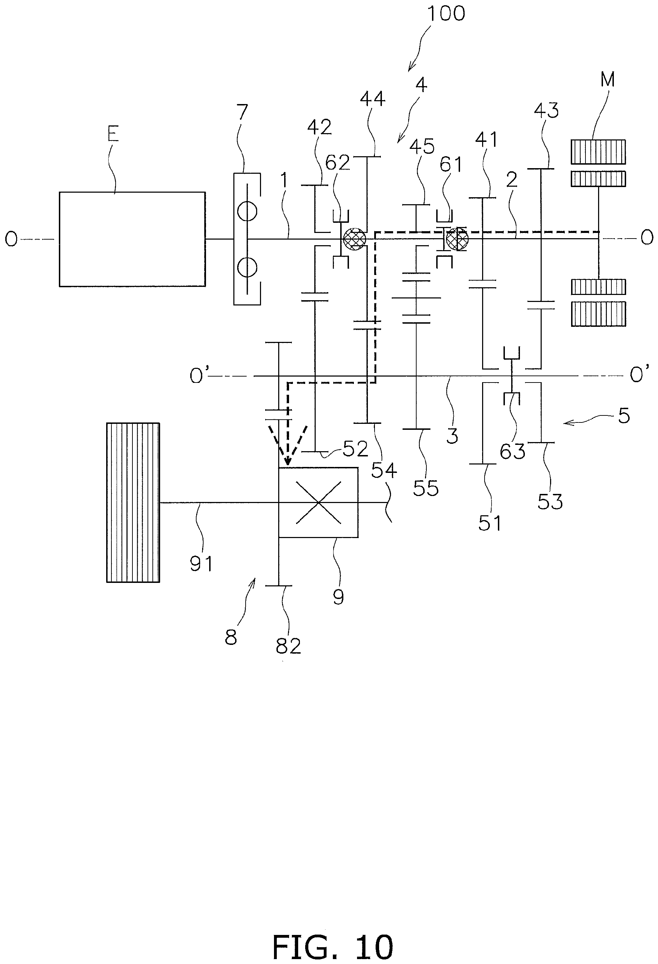

In this case, as indicated with a dotted line in FIG. 10, the torque from the electric motor M is transmitted through a path of "the electric motor M → the second input shaft 2 → the first input shaft 1 → the fourth stage input gear 44 → the fourth stage output gear 54 → the output shaft 3 → the final gear train 8". The gear ratio in this path is as follows.

$$(\text{Gear } 4: \ 0.8) \times (\text{Gear } F: \ 3) = 2.4$$

[Gear Shift Pattern No. 9]

As shown in FIG. 2, in the gear shift pattern No. 9, the torque from the engine E is transmitted to the first input shaft 1 in the clutch 7. Additionally, the first input shaft 1 and the second input shaft 2 are coupled by the first synchromesh mechanism 61. Moreover, the first stage output gear 51 is coupled to the output shaft 3 by the third synchromesh mechanism 63.

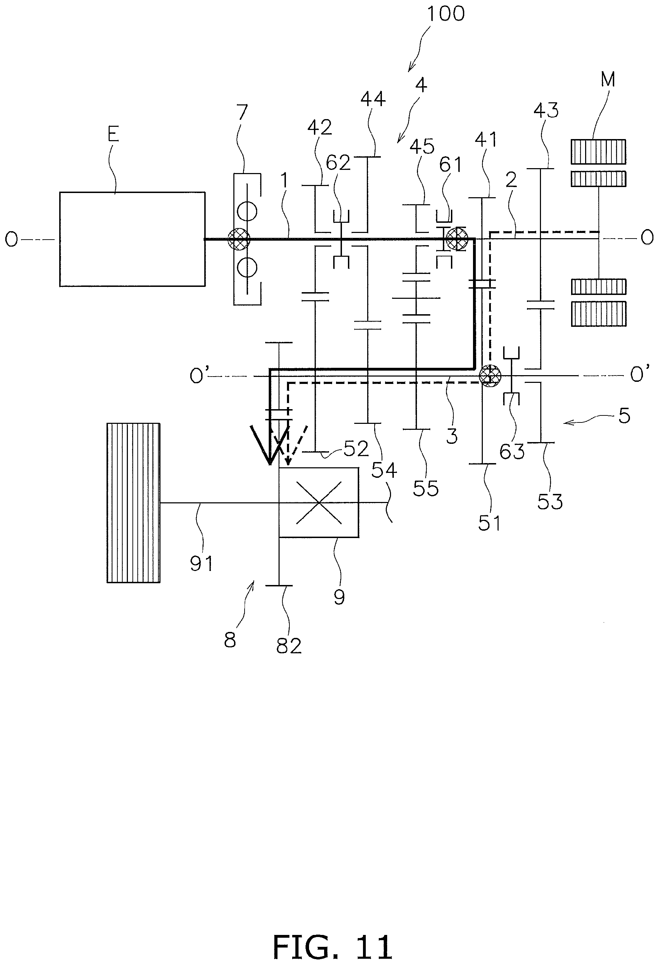

In this case, as indicated with a bold line in FIG. 11, the torque from the engine E is transmitted through a path of "the engine E → the first input shaft 1 → the second input shaft 2 → the first stage input gear 41 → the first stage output gear 51 → the output shaft 3 → the final gear train 8". The gear ratio in this path is as follows.

$$(\text{Gear } 1: \ 3.5) \times (\text{Gear } F: \ 3) = 10.5$$

On the other hand, as indicated with a dotted line in FIG. 11, the torque from the electric motor M is transmitted through a path of "the electric motor M → the second input shaft 2 → the first stage input gear 41 → the first stage output gear 51 → the output shaft 3 → the final gear train 8". The gear ratio in this path is as follows.

```
(Gear 1: 3.5)×(Gear F: 3)=10.5
```

[Gear Shift Pattern No. 10]

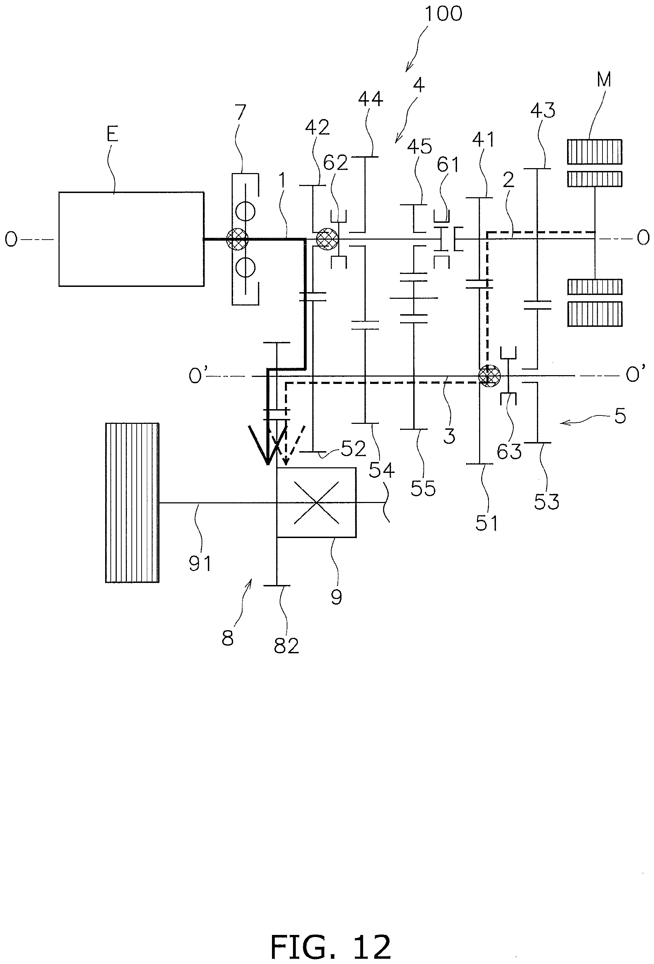

As shown in FIG. 2, in the gear shift pattern No. 10, the torque from the engine E is transmitted to the first input shaft 1 in the clutch 7. Additionally, the second stage input gear 42 is coupled to the first input shaft 1 by the second synchromesh mechanism 62. Moreover, the first stage output gear 51 is coupled to the output shaft 3 by the third synchromesh mechanism 63.
In this case, as indicated with a bold line in FIG. 12, the torque from the engine E is transmitted through a path of "the engine E → the first input shaft 1 → the second stage input gear 42 → the second stage output gear 52 → the output shaft 3 → the final gear train 8". The gear ratio in this path is as follows.

```
(Gear 2: 2.4)×(Gear F: 3)=7.2
```

On the other hand, as indicated with a dotted line in FIG. 12, the torque from the electric motor M is transmitted through a path of "the electric motor M → the second input shaft 2 → the first stage input gear 41 → the first stage output gear 51 → the output shaft 3 → the final gear train 8". The gear ratio in this path is as follows.

```
(Gear 1: 3.5)×(Gear F: 3)=10.5
```

[Gear Shift Pattern No. 11]

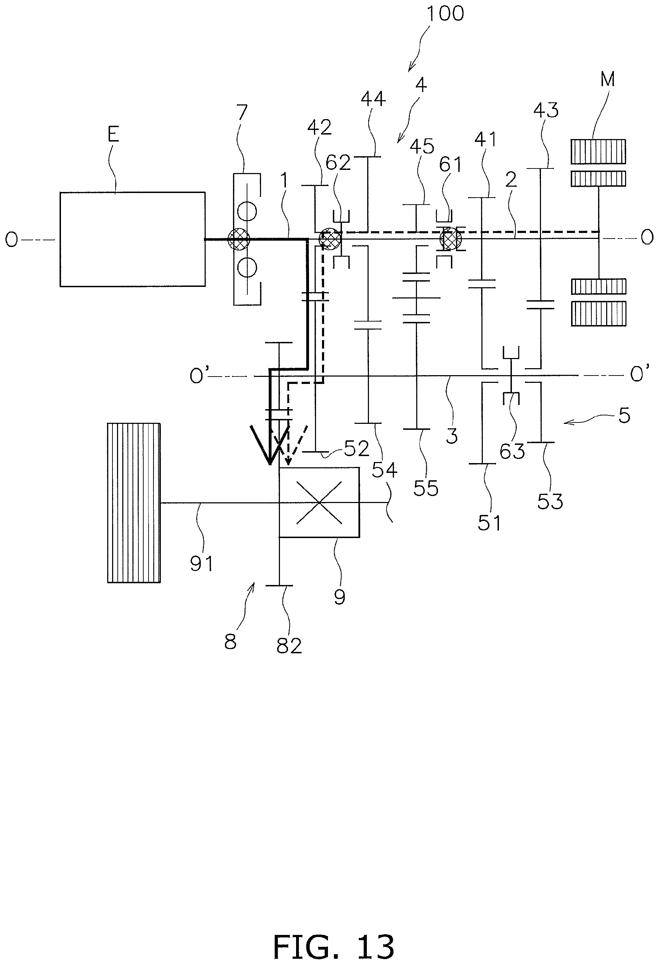

As shown in FIG. 2, in the gear shift pattern No. 11, the torque from the engine E is transmitted to the first input shaft 1 in the clutch 7. Additionally, the first input shaft 1 and the second input shaft 2 are coupled by the first synchromesh mechanism 61. Moreover, the second stage input gear 42 is coupled to the first input shaft 1 by the second synchromesh mechanism 62.
In this case, as indicated with a bold line in FIG. 13, the torque from the engine E is transmitted through a path of "the engine E → the first input shaft 1 → the second stage input gear 42 → the second stage output gear 52 → the output shaft 3 → the final gear train 8". The gear ratio in this path is as follows.

```
(Gear 2: 2.4)×(Gear F: 3)=7.2
```

On the other hand, as indicated with a dotted line in FIG. 13, the torque from the electric motor M is transmitted through a path of "the electric motor M → the second input shaft 2 → the first input shaft 1 → the second stage input gear 42 → the second stage output gear 52 → the output shaft 3 → the final gear train 8". The gear ratio in this path is as follows.

```
(Gear 2: 2.4)×(Gear F: 3)=7.2
```

[Gear Shift Pattern No. 12]

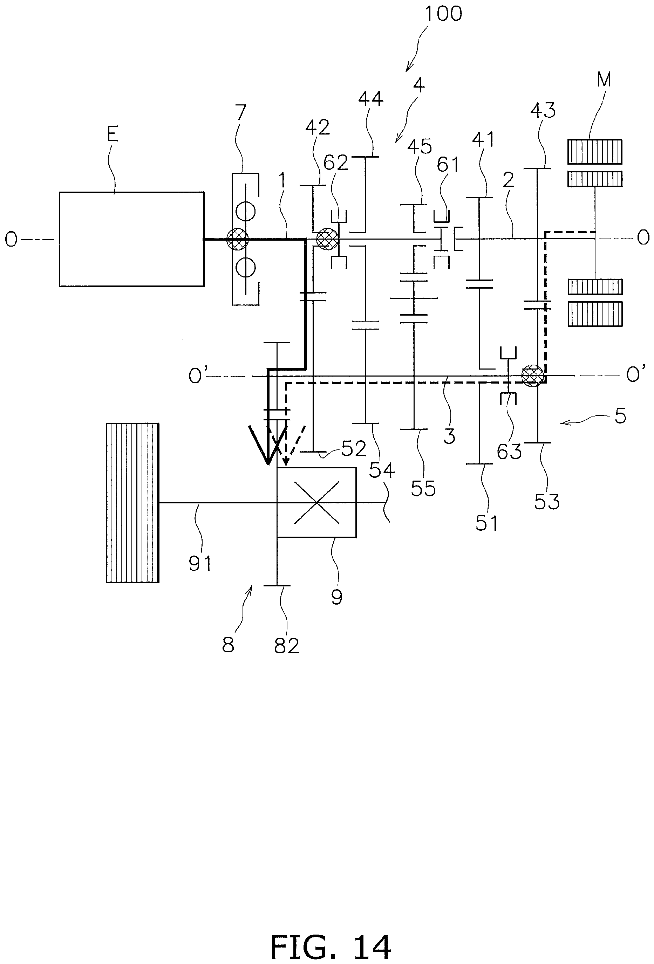

As shown in FIG. 2, in the gear shift pattern No. 12, the torque from the engine E is transmitted to the first input shaft 1 in the clutch 7. Additionally, the second stage input gear 42 is coupled to the first input shaft 1 by the second synchromesh mechanism 62. Moreover, the third stage output gear 53 is coupled to the output shaft 3 by the third synchromesh mechanism 63.
In this case, as indicated with a bold line in FIG. 14, the torque from the engine E is transmitted through a path of "the engine E → the first input shaft 1 → the second stage input gear 42 → the second stage output gear 52 → the output shaft 3 → the final gear train 8". The gear ratio in this path is as follows.

```
(Gear 2: 2.4)×(Gear F: 3)=7.2
```

On the other hand, as indicated with a dotted line in FIG. 14, the torque from the electric motor M is transmitted through a path of "the electric motor M → the second input shaft 2 → the third stage input gear 43 → the third stage output gear 53 → the output shaft 3 → the final gear train 8". The gear ratio in this path is as follows.

```
(Gear 3: 1.2)×(Gear F: 3)=3.6
```

[Gear Shift Pattern No. 13]

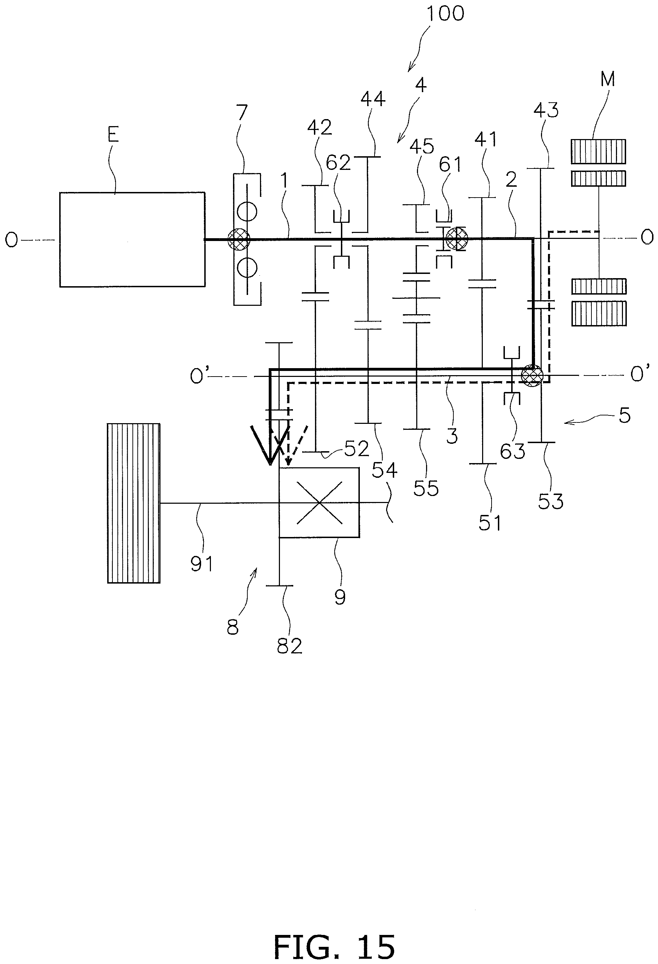

As shown in FIG. 2, in the gear shift pattern No. 13, the torque from the engine E is transmitted to the first input shaft 1 in the clutch 7. Additionally, the first input shaft 1 and the second input shaft 2 are coupled by the first synchromesh mechanism 61. Moreover, the third stage output gear 53 is coupled to the output shaft 3 by the third synchromesh mechanism 63.
In this case, as indicated with a bold line in FIG. 15, the torque from the engine E is transmitted through a path of "the engine E → the first input shaft 1 → the second input shaft 2 → the third stage input gear 43 → the third stage output gear 53 → the output shaft 3 → the final gear train 8". The gear ratio in this path is as follows.

```
(Gear 3: 1.2)×(Gear F: 3)=3.6
```

On the other hand, as indicated with a dotted line in FIG. 15, the torque from the electric motor M is transmitted through a path of "the electric motor M → the second input shaft 2 → the third stage input gear 43 → the third stage output gear 53 → the output shaft 3 → the final gear train 8". The gear ratio in this path is as follows.

$$(Gear\ 3:\ 1.2) \times (Gear\ F:\ 3) = 3.6$$

[Gear Shift Pattern No. 14]

As shown in FIG. 2, in the gear shift pattern No. 14, the torque from the engine E is transmitted to the first input shaft 1 in the clutch 7. Additionally, the fourth stage input gear 44 is coupled to the first input shaft 1 by the second synchromesh mechanism 62. Moreover, the first stage output gear 51 is coupled to the output shaft 3 by the third synchromesh mechanism 63.

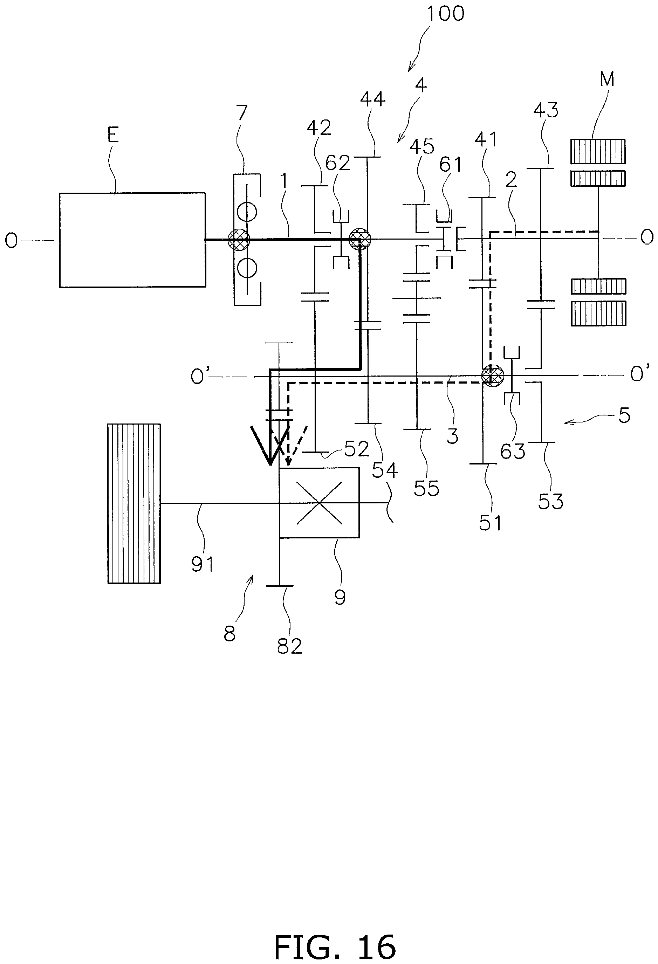

In this case, as indicated with a bold line in FIG. 16, the torque from the engine E is transmitted through a path of "the engine E → the first input shaft 1 → the fourth stage input gear 44 → the fourth stage output gear 54 → the output shaft 3 → the final gear train 8". The gear ratio in this path is as follows.

$$(Gear\ 4:\ 0.8) \times (Gear\ F:\ 3) = 2.4$$

On the other hand, as indicated with a dotted line in FIG. 16, the torque from the electric motor M is transmitted through a path of "the electric motor M → the second input shaft 2 → the first stage input gear 41 → the first stage output gear 51 → the output shaft 3 → the final gear train 8". The gear ratio in this path is as follows.

$$(Gear\ 1:\ 3.5) \times (Gear\ F:\ 3) = 10.5$$

[Gear Shift Pattern No. 15]

As shown in FIG. 2, in the gear shift pattern No. 15, the torque from the engine E is transmitted to the first input shaft 1 in the clutch 7. Additionally, the fourth stage input gear 44 is coupled to the first input shaft 1 by the second synchromesh mechanism 62. Moreover, the third stage output gear 53 is coupled to the output shaft 3 by the third synchromesh mechanism 63.

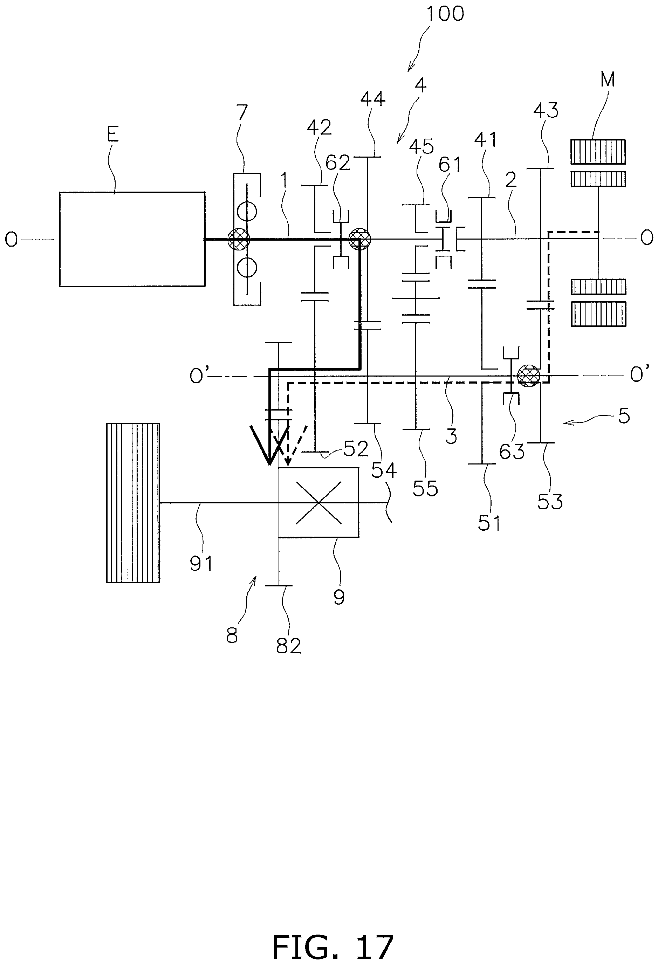

In this case, as indicated with a bold line in FIG. 17, the torque from the engine E is transmitted through a path of "the engine E → the first input shaft 1 → the fourth stage input gear 44 → the fourth stage output gear 54 → the output shaft 3 → the final gear train 8". The gear ratio in this path is as follows.

$$(Gear\ 4:\ 0.8) \times (Gear\ F:\ 3) = 2.4$$

On the other hand, as indicated with a dotted line in FIG. 17, the torque from the electric motor M is transmitted through a path of "the electric motor M → the second input shaft 2 → the third stage input gear 43 → the third stage output gear 53 → the output shaft 3 → the final gear train 8". The gear ratio in this path is as follows.

$$(Gear\ 3:\ 1.2) \times (Gear\ F:\ 3) = 3.6$$

[Gear Shift Pattern No. 16]

As shown in FIG. 2, in the gear shift pattern No. 16, the torque from the engine E is transmitted to the first input shaft 1 in the clutch 7. Additionally, the first input shaft 1 and the second input shaft 2 are coupled by the first synchromesh mechanism 61. Moreover, the fourth stage input gear 44 is coupled to the first input shaft 1 by the second synchromesh mechanism 62.

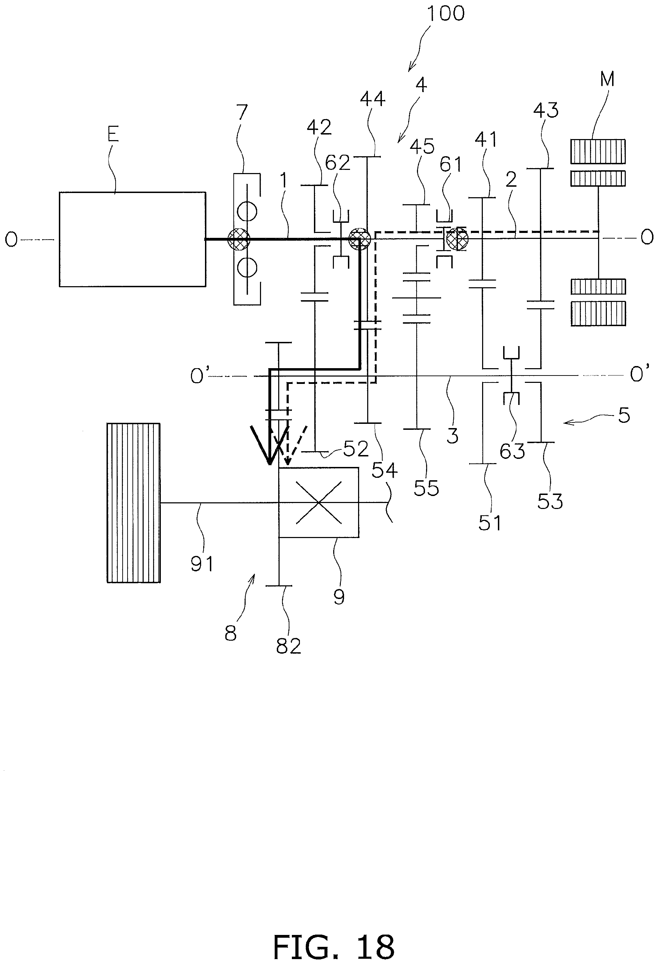

In this case, as indicated with a bold line in FIG. 18, the torque from the engine E is transmitted through a path of "the engine E → the first input shaft 1 → the fourth stage input gear 44 → the fourth stage output gear 54 → the output shaft 3 → the final gear train 8". The gear ratio in this path is as follows.

$$(Gear\ 4:\ 0.8) \times (Gear\ F:\ 3) = 2.4$$

On the other hand, as indicated with a dotted line in FIG. 18, the torque from the electric motor M is transmitted through a path of "the electric motor M → the second input shaft 2 → the first input shaft 1 → the fourth stage input gear 44 → the fourth stage output gear 54 → the output shaft 3 → the final gear train 8". The gear ratio in this path is as follows.

$$(Gear\ 4:\ 0.8) \times (Gear\ F:\ 3) = 2.4$$

[Gear Shift Pattern No. 17]

As shown in FIG. 2, in the gear shift pattern No. 17, the torque from the engine E is transmitted to the first input shaft 1 in the clutch 7. Additionally, the reverse input gear 45 is coupled to the first input shaft 1 by the first synchromesh mechanism 61.

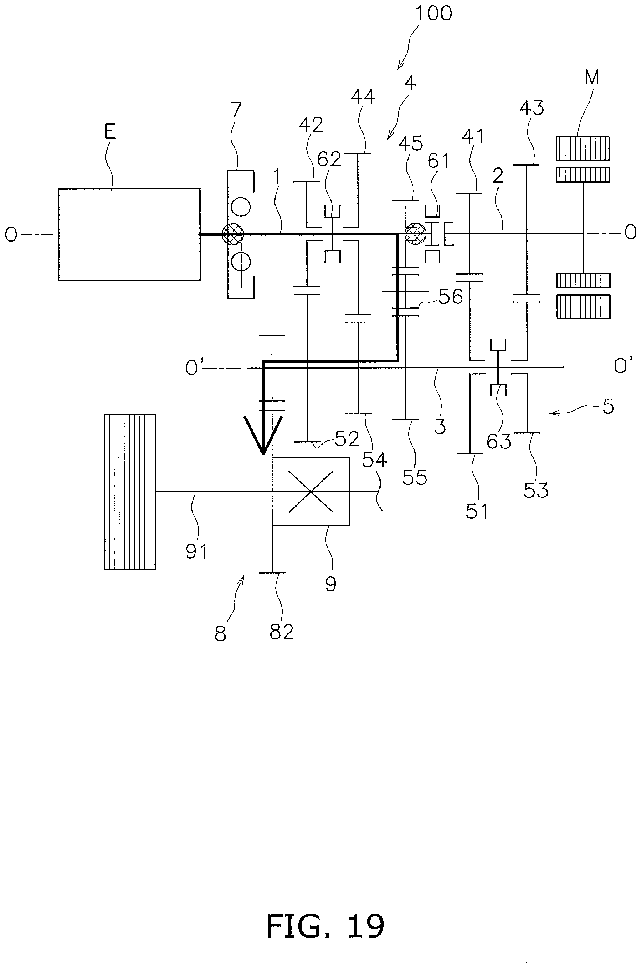

In this case, as indicated with a bold line in FIG. 19, the torque from the engine E is transmitted through a path of "the engine E → the first input shaft 1 → the reverse input gear 45 → the idler gear 56 → the reverse output gear 55 → the output shaft 3 → the final gear train 8". The gear ratio in this path is as follows.

$$(Gear\ Rev:\ 4) \times (Gear\ F:\ 3) = 12$$

[Gear Shift Pattern No. 18]

As shown in FIG. 2, in the gear shift pattern No. 18, the torque from the engine E is transmitted to the first input shaft 1 in the clutch 7. Additionally, the first input shaft 1 and the second input shaft 2 are coupled by the first synchromesh mechanism 61.

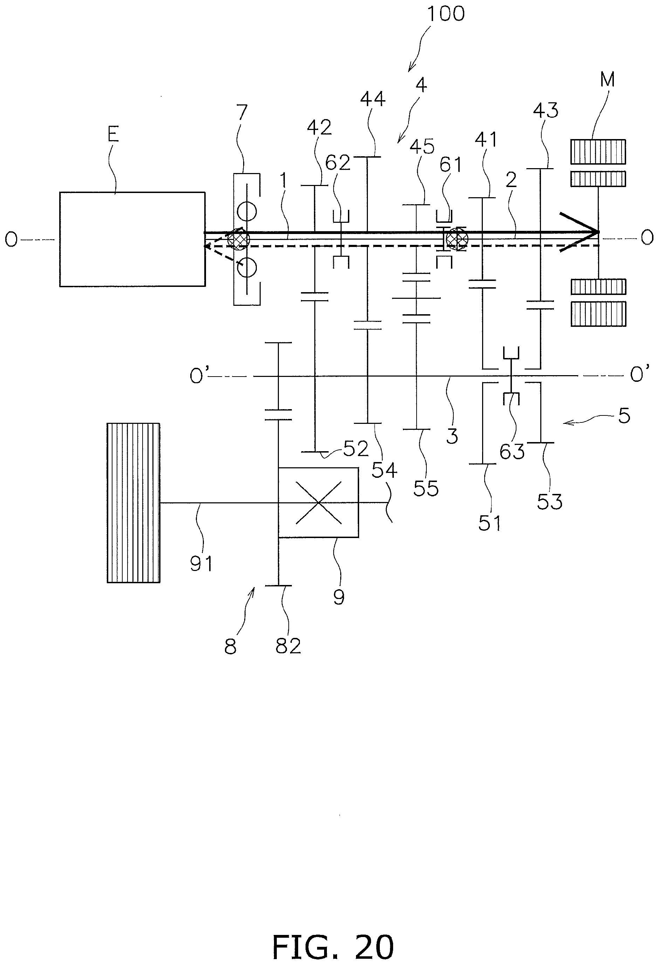

In generating electric power by the electric motor M, as indicated with a bold line in FIG. 20, the torque from the engine E is transmitted through a path of "the engine E → the first input shaft 1 → the second input shaft 2 → the electric motor M".

On the other hand, in starting of the engine E, as indicated with a dotted line in FIG. 20, the torque from the electric motor M is transmitted through a path of "the electric motor M → the second input shaft 2 → the first input shaft 1 → the engine E".

[Modifications]

One exemplary embodiment of the present invention has been explained above. However, the present invention is not limited to the aforementioned exemplary embodiment, and a variety of changes can be made without departing from the gist of the present invention.

Modification 1

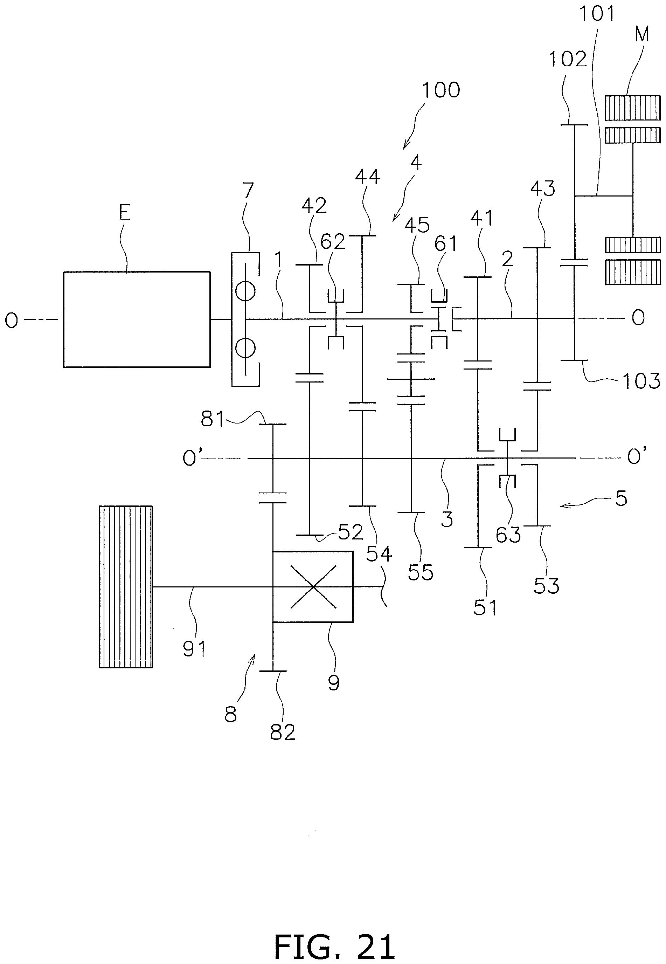

In the aforementioned exemplary embodiment, the electric motor M is directly connected to the second input shaft 2. However, the configuration to connect the electric motor M is not limited to the above. For example, the second input shaft 2 may be connected to an output shaft of the electric motor M through a gear and so forth. Specifically, as shown in FIG. 21, the hybrid vehicle transmission 100 further includes a third input shaft 101, a drive gear 102 and a driven gear 103. The third input shaft 101 is disposed in parallel to the second input shaft 2. The third input shaft 101 is a component to which the electric motor M is connected. The drive gear 102 is rotated unitarily with the third input shaft 101. The driven gear 103 is rotated unitarily with the second input shaft 2, and is meshed with the drive gear 102.

Modification 2

The gear shift patterns in the aforementioned exemplary embodiment are exemplary only, and a variety of gear shift patterns can be realized.

Modification 3

In the aforementioned exemplary embodiment, the hybrid vehicle transmission 100 has four gear stages, but may have five or more gear stages or three or less gear stages.

Modification 4

In the aforementioned exemplary embodiment, the input gears corresponding to the even-numbered gear stages are supported by the first input shaft 1, whereas the input gears corresponding to the odd-numbered gear stages are supported by the second input shaft 2. However, the positional relation between the former input gears and the latter input gears may be reversed.

Modification 5

In the aforementioned exemplary embodiment, the second synchromesh mechanism 62 is attached to the first input shaft 1, whereas the third synchromesh mechanism 63 is attached to the output shaft 3. However, the layout of the second synchromesh mechanism 62 and the third synchromesh mechanism 63 is not limited to the above. For example, the second synchromesh mechanism 62 may be attached to the output shaft 3, whereas the third synchromesh mechanism 63 may be attached to the second input shaft 2.

REFERENCE SIGNS LIST

| | |
|---|---|
| 1 | First input shaft |
| 2 | Second input shaft |
| 3 | Output shaft |
| 41 | First stage input gear |
| 42 | Second stage input gear |
| 43 | Third stage input gear |
| 44 | Fourth stage input gear |
| 51 | First stage output gear |
| 52 | Second stage output gear |
| 53 | Third stage output gear |
| 54 | Fourth stage output gear |
| 61 | First synchromesh mechanism |
| 100 | Hybrid vehicle transmission |
| E | Engine |
| M | Electric motor |

**Claims**

1. A hybrid vehicle transmission having a plurality of gear stages, the hybrid vehicle transmission outputting rotation of each of an engine and an electric motor after the rotation is changed in speed therethrough, the hybrid vehicle transmission comprising:

   a first input shaft to which a torque is inputted from the engine;
   a second input shaft to which a torque is inputted from the electric motor, the second input shaft being disposed coaxially to the first input shaft;
   an output shaft disposed in parallel to the first and second input shafts;
   a plurality of input gears provided in correspondence to the plurality of gear stages, the plurality of input gears being each supported by either the first input shaft or the second input shaft;
   a plurality of output gears provided in correspondence to the plurality of gear stages, the plurality of output gears being supported by the output shaft; and
input shaft coupling means configured to couple the first input shaft and the second input shaft while being capable of decoupling the first input shaft and the second input shaft.

2. The hybrid vehicle transmission according to claim 1, further comprising:

    input gear coupling means, wherein
    the plurality of input gears include a stationary input gear and a movable input gear, the stationary input gear being attached to either the first input shaft or the second input shaft so as to be rotated unitarily therewith, the movable input gear being attached to either the first input shaft or the second input shaft so as to be rotated relatively thereto, and
    the input gear coupling means is configured to couple the movable input gear to either the first input shaft or the second input shaft and decouple the movable input gear therefrom.

3. The hybrid vehicle transmission according to claim 1 or 2, further comprising:

    output gear coupling means, wherein
    the plurality of output gears include a stationary output gear and a movable output gear, the stationary output gear being attached to the output shaft so as to be rotated unitarily therewith, the movable output gear being attached to the output shaft so as to be rotated relatively thereto, and
    the output gear coupling means is configured to couple the movable output gear to the output shaft and decouple the movable output gear therefrom.

4. The hybrid vehicle transmission according to any of claims 1 to 3, wherein
one input gear of the plurality of input gears corresponds to odd-numbered one of the plurality of gear stages, the one input gear being supported by one of the first input shaft and the second input shaft, and another input gear of the plurality of input gears corresponds to even-numbered one of the plurality of gear stages, the another input gear being supported by the other of the first input shaft and the second input shaft.

5. The hybrid vehicle transmission according to any of claims 1 to 3, wherein
one input gear of the plurality of input gears corresponds to odd-numbered one of the plurality of gear stages, the one input gear being supported by the second input shaft, and
another input gear of the plurality of input gears corresponds to even-numbered one of the plurality of gear stages, the another input gear being supported by the first input shaft.

6. The hybrid vehicle transmission according to any of claims 1 to 5, wherein the plurality of gear stages are four gear stages.

7. The hybrid vehicle transmission according to any of claims 1 to 6, further comprising:
a reverse gear stage for backward movement provided separately from the plurality of gear stages.

8. The hybrid vehicle transmission according to any of claims 1 to 7, wherein the input shaft coupling means is a synchromesh mechanism.

9. The hybrid vehicle transmission according to claim 2, wherein the input gear coupling means is a synchromesh mechanism.

10. The hybrid vehicle transmission according to claim 3, wherein the output gear coupling means is a synchromesh mechanism.

11. The hybrid vehicle transmission according to any of claims 1 to 10, further comprising:
a clutch configured to allow and block transmission of the torque from the engine to the first input shaft therethrough.

12. The hybrid vehicle transmission according to claim 11, wherein the clutch is a dry friction clutch.

13. The hybrid vehicle transmission according to any of claims 1 to 12, further comprising:

    a third input shaft to which the electric motor is connected, the third input shaft being disposed in parallel to the second input shaft;
    a drive gear rotated unitarily with the third input shaft; and
    a driven gear rotated unitarily with the second input shaft, the driven gear being meshed with the drive gear.

FIG. 1

| No. | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| | ENGINE TRAVELING | | | | MOTOR TRAVELING | | | | HEV TRAVELING | | | | | | | | BACKWARD MOVEMENT | ENG STARTING / POWER GENERATION DURING VEHICLE STOP |
| ENGINE — GEAR STAGE | 1st | 2nd | 3rd | 4th | - | - | - | - | 1st | 2nd | 2nd | 2nd | 3rd | 4th | 4th | 4th | Rev | - |
| ENGINE — TOTAL REDUCTION RATIO | 10.5 | 7.2 | 3.6 | 2.4 | - | - | - | - | 10.5 | 7.2 | 7.2 | 7.2 | 3.6 | 2.4 | 2.4 | 2.4 | 12 | - |
| MOTOR — GEAR STAGE | | | | | 1st | 2nd | 3rd | 4th | 1st | 1st | 2nd | 3rd | 3rd | 1st | 3rd | 4th | - | - |
| MOTOR — TOTAL REDUCTION RATIO | | | | | 10.5 | 7.2 | 3.6 | 2.4 | 10.5 | 10.5 | 7.2 | 3.6 | 3.6 | 10.5 | 3.6 | 2.4 | - | - |
| GEAR 1 (ex. GEAR RATIO 3.5) | 3.5 | | | | 3.5 | | | | 3.5 | 3.5 | | | | 3.5 | | | | |
| GEAR 2 (2.4) | | 2.4 | | | | 2.4 | | | | 2.4 | 2.4 | 2.4 | | | | | | |
| GEAR 3 (1.2) | | | 1.2 | | | | 1.2 | | | | | 1.2 | 1.2 | | 1.2 | | | |
| GEAR 4 (0.8) | | | | 0.8 | | | | 0.8 | | | | | | 0.8 | 0.8 | 0.8 | | |
| GEAR Rev (4) | | | | | | | | | | | | | | | | | 4 | |
| GEAR F (3) | 3 | 3 | 3 | 3 | 3 | 3 | 3 | 3 | 3 | 3 | 3 | 3 | 3 | 3 | 3 | 3 | 3 | |
| CL1 | O | O | O | O | | | | | O | O | O | O | O | O | O | O | O | O |
| syn1 | | O | | | | O | | | | O | O | O | | | | | | |
| syn2 | | | O | | | | | O | | | | | | O | O | O | | |
| syn3 | | | | | | | | | | | | | | | | | O | |
| syn4 | O | | O | | | O | | O | O | | O | | O | | O | | | O |
| syn5 | O | | | | O | | | | O | O | | | | O | | | | |
| syn6 | | | O | | | | O | | | | | O | O | | O | | | |

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

# FIG. 19

FIG. 20

FIG. 21

<div align="center">

**INTERNATIONAL SEARCH REPORT**

</div>

| International application No. |
|---|
| PCT/JP2018/007708 |

**A. CLASSIFICATION OF SUBJECT MATTER**

Int.Cl.   B60K6/36(2007.10)i,   B60K6/387(2007.10)i,   B60K6/40(2007.10)i,
B60K6/48(2007.10)i,   B60K6/547(2007.10)i,   B60K17/04(2006.01)i,
B60K17/08(2006.01)i,   B60L11/14(2006.01)i,   B60W10/10(2012.01)i,
B60W20/30(2016.01)i,   F16H3/089(2006.01)i

According to International Patent Classification (IPC) or to both national classification and IPC

**B. FIELDS SEARCHED**

Minimum documentation searched (classification system followed by classification symbols)
Int.Cl. B60K6/20-6/547, B60W10/00-20/50

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-197077 A (DENSO CORP.) 18 October 2012, paragraphs [0039]-[0052], fig. 1 & US 2012/0006153 A1, paragraphs [0068]-[0081], fig. 1 & CN 102343801 A | 1, 4-8, 13<br>2-3, 9-12 |
| Y<br>A | JP 2014-31123 A (HONDA MOTOR CO., LTD.) 20 February 2014, paragraphs [0045], [0049]-[0051] (Family: none) | 2-3, 9-12<br>1, 4-8, 13 |

☐  Further documents are listed in the continuation of Box C.    ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 May 2018 (25.05.2018) | 05 June 2018 (05.06.2018) |

| Name and mailing address of the ISA/<br>   Japan Patent Office<br>   3-4-3, Kasumigaseki, Chiyoda-ku,<br>   Tokyo 100-8915, Japan | Authorized officer<br><br><br>Telephone No. |
|---|---|

Form PCT/ISA/210 (second sheet) (January 2015)

**EP 3 575 115 A1**

## REFERENCES CITED IN THE DESCRIPTION

### Patent documents cited in the description

- JP 2005153691 A